# EUROPEAN PATENT APPLICATION

(11) **EP 3 242 075 A1**
(43) Date of publication of application: **08.11.2017**
(21) Application number: 17168462.4
(22) Date of filing: 27.04.2017
(51) Int. Cl.: F21S 8/10, F21V 8/00

(54) **LIGHT GUIDE ASSEMBLY AND VEHICLE LAMP**

(30) Priority: 05.05.2016 CN 201620399232 U
(71) Applicant: Wuhu Valeo Automotive Lighting Systems Co., Ltd., Wuhu Anhui 241009 (CN)
(72) Inventor: WANG, Shidong, WUHU, Anhui 241009 (CN); FU, Zhengliang, WUHU, Anhui 241009 (CN)
(74) Representative: Khairallah, Murielle

(57) **Abstract**

The present disclosure provides a light guide assembly and a vehicle lamp. The light guide assembly includes a light guide having an elongated light guiding portion, and a light guide support, the elongated light guiding portion having an end provided with a positioning device for positioning the light guide on the light guide support. It may improve reliability of positioning the light guide by the positioning device arranged at the end of the elongated light guiding part of the light guide.

## Description

### BACKGROUND OF THE DISCLOSURE

### Field of the Disclosure

The present disclosure relates to a technical field of light guide, and in particular to a light guide assembly and a vehicle lamp.

### Description of the Related Art

A light guide is an important component for light transmission and illumination and has been widely applied in various fields of light illumination. So-called light guide is a light conduction component in which the light is transmitted mainly by internal total reflection. It may have various shapes, for example a cylinder shape (may be called as a light guide rod), a strip shape (may be called as a light guide bar or a lamp bar), a plate shape (may be called as a light guide plate) or a ring shape (may be called as a light guide ring), or the like. As the light is guided mainly by total reflection in the light guide, the light guide has a high optical efficiency and low optical loss. However, the light guide typically has an elongated shaped light guiding portion, thus it has relatively high requirements on positioning of the light guide. And the light guide guides the light by total reflection, thus, if the light guide is fixed at an end distant from the light guide, it needs to consider the issues such as whether the total reflection conditions may be destroyed. If the light guide is positioned unstably, the issues such as noises may be induced.

### SUMMARY

The present disclosure is intended to provide a light guide assembly that can improve reliability of positioning the light guide to reduce noises.

The present disclosure is also intended to provide a vehicle lamp having the above light guide assembly.

An embodiment of the present application provides a light guide assembly including a light guide having an elongated light guiding portion and a light guide support, the elongated light guiding portion having an end including a positioning device for positioning the light guide on the light guide support.

In an embodiment, the end is provided with a fastening part for fastening a light source support on the light guide.

In an embodiment, the fastening part has clipping device for fastening the light source support.

In an embodiment, the fastening part has locating device for positioning the light source support so as to position the light source in front of a coupling face of the light guide.

In an embodiment, the locating device includes a rim of the fastening part, and a hole provided into this rim intended to accommodate a part of the light source support.

In an embodiment, the positioning device is supported by the fastening part.

In an embodiment, the fastening part has a first surface and a second surface, and the positioning device is supported by the first surface of the fastening part and the second surface is situated opposite to the first surface of the fastening part and intended to accommodate the light source support.

In an embodiment, the fastening part extends perpendicular to the direction of extension of the elongated light guiding portion of the light guide.

In an embodiment, the positioning device is integrally formed with the elongated light guiding portion.

In an embodiment, the positioning device is integrally formed with the elongated light guiding portion and with the fastening part.

In an embodiment, the positioning device is a specific part assembled to the elongated light guiding portion.

In an embodiment, the positioning device is a specific part formed with the fastening part and assembled to the elongated light guiding portion.

In an embodiment, the positioning device includes a positioning hook, and the light guide support includes: an accommodating groove arranged to receive the positioning hook; wherein one or more supporting rib/ribs is/are arranged on an inner wall of the accommodating groove and configured to support against the positioning hook.

In an embodiment, the supporting rib/ribs extends/extend along a longitudinal direction of the accommodating groove.

In an embodiment, the inner wall of the accommodating groove has a first side wall inner face, a second side wall inner face opposed to the first side wall inner face, and a bottom inner face, wherein the supporting rib/ribs is/are arranged on at least one of the first side wall inner face, the second side wall inner face and the bottom inner face.

In an embodiment, all of the first side wall inner face, the second side wall inner face and the bottom inner face are provided with the supporting rib/ribs thereon.

In an embodiment, the supporting rib/ribs is/are distributed discretely or continuously in a longitudinal direction of the accommodating groove.

In an embodiment, the supporting rib/ribs is/are formed by fillers in the accommodating groove or formed integrally with the accommodating groove.

In an embodiment, the positioning hook is arranged against the supporting rib/ribs of the light guide support.

In an embodiment, the positioning hook has three surfaces against the supporting rib/ribs.

In an embodiment, the positioning hook and the supporting rib/ribs form interference fit to each other.

An embodiment of the present application provides a vehicle lamp including the light guide assembly as described in any one of the above embodiments.

At least one embodiment of the above technical solutions in the present application may improve reliability of positioning the light guide by the positioning device arranged at the end of the elongated light guiding part of the light guide.

### BRIEF DESCRIPTION OF THE DRAWINGS

Fig. 1 is a schematic view showing a light guide in a light guide assembly according to an embodiment of the present disclosure;
Fig. 2 is a schematic perspective view showing a local part of a light guide assembly adjacent to an end of a light guide according to an embodiment of the present disclosure; and
Fig. 3 and Fig. 4 are schematic views showing a principle of locating a light guide into a light guide assembly according to an embodiment of the present disclosure.

### DETAILED DESCRIPTION OF PREFERRED EMBODIMENTS

Embodiments of the present disclosure will below be explained in details by ways of examples with reference to the accompanied drawings. Throughout the description, same or similar reference numerals represent same or similar parts. The following description of the embodiments with reference to the drawings is intended to explain the general inventive concept of the present disclosure, instead of limiting the present disclosure.

As discussed above, a light guide 1 typically has an elongated light guiding portion 100. The light guiding portion 100 guides light incident into an end of the light guide by total reflection. In the light guide 1, it's usually required that the incident light satisfies total reflection conditions at an outer wall of the light guiding portion 100; however, when the light inside the light guiding portion 100 is desired to exit from a specified position, it will typically need to break the total reflection conditions of the light at this position. For example, a light uncoupling structure (for example prisms or the like) may be provided in at least one region at a side of the light guiding part 100. The light uncoupling structure has a function of breaking the total reflection conditions of the light in the light guiding portion 100 such that the light reflected by the light uncoupling structure will not be totally reflected and exits the light guiding portion 100 from the side of the light guiding portion 100 opposite to the light uncoupling structure. In practice, at least one part of the light guiding portion 100 may be used as a light exit part for emitting the light from inside of the light guiding portion.

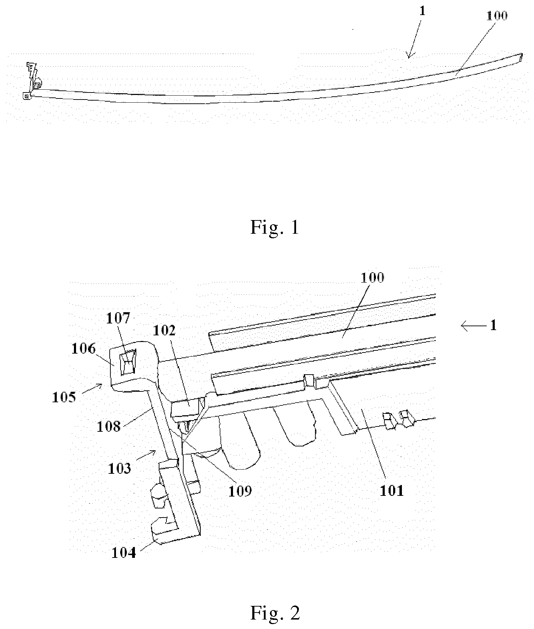

An embodiment of the present disclosure provides a light guide assembly. As shown in Fig. 2 (only shows local part), the light guide assembly includes a light guide 1 and a light guide support 101. The light guide 1 has an elongated light guiding portion 100. The elongated light guiding portion 100 has an end provided with a positioning device 102 for positioning the light guide 1 on the light guide support 100. Use of the positioning device 102 at the end of the light guiding portion 100, may not only position the light guiding portion 100 reliably, but also avoid the interference to the light guiding performance of the light guiding portion 100.

In an example, the end of the light guiding portion 100 may also be provided with a fastening part 103 for fastening a light source support 110 on the light guide 1. As an example, the fastening part 103 has a clipping device 104 for fastening the light source support 110, such as a printed circuit board.

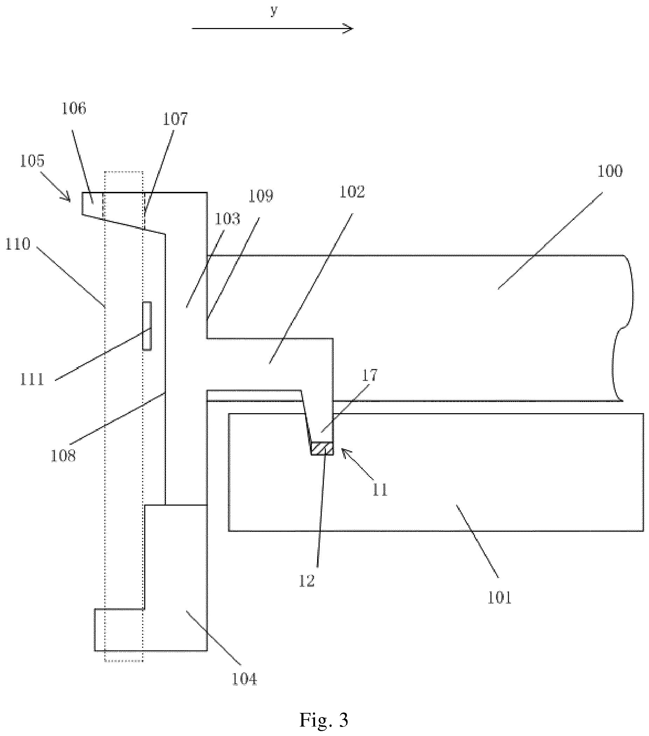

In order to fix the light source support 110, in an example, the fastening part 103 may also have a locating device 105 for positioning the light source support 110 so as to position a light source 111 in front of a light incident face of the light guide 1, as illustrated in Fig. 3.

In examples shown in Figs. 2-3, the locating device includes a flange 105 of the fastening part 103, and a hole 107 is provided in this flange 105 and configured to accommodate a part (such as a positioning protrusion) of the light source support 110.

In an example, the positioning device 102 is supported by the fastening part 103. As an example, the fastening part 103 may have a first surface 109 and a second surface 108, and the positioning device 102 is supported by the first surface 109 of the fastening part 103, and the second surface 108 is situated opposite to the first surface 109 of the fastening part 103 and configured to accommodate the light source support 110. Such arrangement is beneficial to achieve an impact structure.

As an example, the fastening part 103 may extend in a direction perpendicular to a direction of extension of the elongated light guiding portion 100 of the light guide 1. This may be helpful to control the position and direction of the light source 111.

In an embodiment, the positioning device 102 may be integrally formed with the elongated light guiding portion 100. Or the positioning device 102 may be integrally formed with the elongated light guiding portion 100 and with the fastening part 103. This may be helpful to simplify the process.

In another embodiment, not shown on the drawings, the positioning device 102 is a specific part assembled to the elongated light guiding portion 100.

In another embodiment, not shown on the drawings, the positioning device 102 is a specific part formed with the fastening part 103 and assembled to the elongated light guiding portion 100.

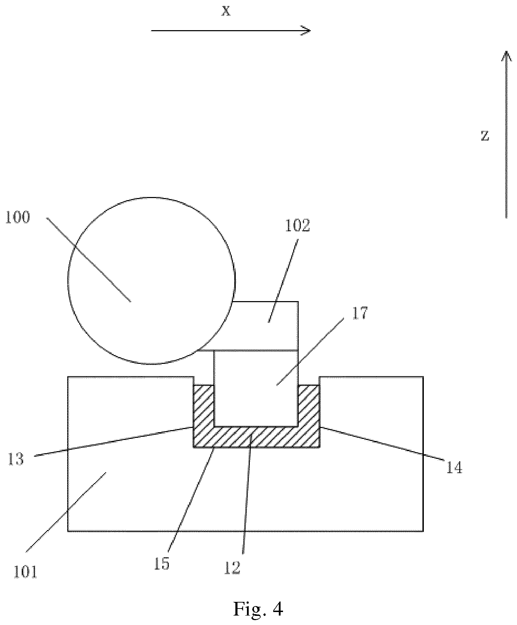

In an example, the positioning device 102 includes a positioning hook 17, and the light guide support 101 may include: an accommodating groove 11 arranged to receive the positioning hook 17 (for example at least one part thereof). One or more supporting rib/ribs 12 is/are arranged on an inner wall of the accommodating groove 11 and configured to abut against and support the positioning hook 17. By cooperation of the supporting rib/ribs 12 with the positioning hook 17, the light guide 1 may be positioned in at least one direction. As an example, the supporting rib/ribs 12 may extend in a longitudinal direction (for example the horizontal direction x shown in Fig. 4) of the accommodating groove 11. This will be beneficial to improve stability in cooperation between the supporting rib/ribs 12 and the positioning hook 17.

Fig.4 is a view obtained by observing the light guide assembly in the y direction shown in Fig. 3. In order to show structures such as the positioning hook 17 and the supporting rib/ribs 12, the fastening part 103 is omitted from Fig. 4.

By means of the positioning device 102 according to the present disclosure, as an example, if necessary, the light guide 1 may be prevented from being positioned and fixed by providing a positioning member (such as a tab) at a position of the light guiding portion 100 other than its end. If the positioning member is arranged at the position of the light guiding portion 100 of the light guide 1 other than its end, the light reflection conditions of the light guiding portion 100 may be broken to change desired light intensity distribution, for example, to cause undesired effects such as light leakage, non-uniform bright spots and the like. Such adverse effects may be avoided by replacing the positioning member by the positioning device 12 according to the present disclosure.

In an embodiment, the inner wall of the accommodating groove 11 has a first side wall inner face 13, a second side wall inner face 14 opposed to the first side wall inner face 13, and a bottom inner face 15. The supporting rib/ribs 12 may be arranged on at least one of the first side wall inner face 13, the second side wall inner face 14 and the bottom inner face 15.

As an example, all of the first side wall inner face 13, the second side wall inner face 14 and the bottom inner face 15 may be provided with the supporting rib/ribs 12 thereon. In this way, the light guide 1 may be positioned stably in at least two directions (for example, in the horizontal direction x and the vertical direction z shown in Fig. 4).

The supporting rib/ribs 12 may reduce or remove a gap between the inner wall of the accommodating groove 11 and the positioning hook 17, so as to provide constraint for the positioning hook 17 to position the light guide 1. The supporting rib/ribs 12 may have various shapes, for example, may be formed by a plurality of separate ribs or may be formed into an integral rib. As an example, the supporting rib/ribs 12 is/are distributed discretely or continuously in a longitudinal direction of the accommodating groove 11.

In an example, the supporting rib/ribs 12 may be formed by fillers in the accommodating groove 11 or formed integrally with the accommodating groove 11. Use of the supporting rib/ribs 12 formed integrally with the accommodating groove 11 may simplify the process.

As an example, the positioning hook 17 may be arranged to abut against the supporting rib/ribs 12 of the light guide support 101. For example, the positioning hook 17 may have three surfaces abutting against the supporting rib/ribs 12. As an example, the three surfaces may contact the respective supporting rib/ribs 12 on the first side wall inner face 13, the second side wall inner face 14 and the bottom inner face 15 of the accommodating groove 11 respectively, so as to increase a contact area such that the positioning hook 17 cooperates with the supporting rib/ribs 12 more firmly.

In an example, the positioning hook 17 and the supporting rib/ribs 12 may form interference fit to each other. In such circumstance, the gap formed by the supporting rib/ribs 12 may be slightly smaller than the external dimension of the positioning hook 17, such that the positioning hook 17 and the supporting rib/ribs 12 may be deformed to some extent after the positioning hook 17 is inserted into the supporting rib/ribs 12. In this way, the position relation between the positioning hook 17 and the supporting rib/ribs 12 may be fixed in a more firm manner such that the positioning accuracy of the light guide 1 with respect o the light guide support 101 may be improved.

Although Fig. 4 only shows the positioning hook 17 is provided on one side of the light guiding portion 100, the embodiments of the present disclosure are not limited to this, for example, the positioning hooks 17 may be provided on both sides of the light guiding portion 100.

With the light guide assembly according to the present disclosure, the light guide may be positioned more reliably and adverse effects such as noises may be suppressed.

In an embodiment of the present disclosure, the light guide support 101 may be a single separate component, or may be a part of another component (for example a housing, a reflector or a panel or the like).

An embodiment of the present disclosure also provides a vehicle lamp including the light guide assembly as described in any one of the above embodiments.

It should be noted that drawings in the present application are only schematic views intended to explain the principle of the technical concepts of the present disclosure. Scales of respective components in these drawings do not represent those in real.

The light guide assembly according to the present disclosure may be used in, for example, an LED lamp illumination apparatus, an electric incandescent lamp or a fluorescent lamp illumination apparatus.

The present disclosure has been explained with reference to drawings. However, the examples shown in drawings are only intended to exemplarily illustrate the embodiments of the present disclosure by way of examples, instead of limiting the present disclosure.

Although some of embodiments according to a general concept of the present disclosure have been illustrated and explained, the skilled person in the art will understand that these embodiments may be modified without departing principles and spirits of the present disclosure. The scope of the present disclosure will be defined by the appended claims and equivalents thereof.

## Claims

1. A light guide assembly, comprising a light guide having an elongated light guiding portion (100), and a light guide support (101), said elongated light guiding portion having an end provided with a positioning device (102) for positioning the light guide on said light guide support.

2. The light guide assembly according to claim 1, **characterized in that** the end is further provided with a fastening part (103) for fastening a light source support (110) on said light guide.

3. The light guide assembly according to claim 2, **characterized in that** said fastening part comprises a locating device (105) for positioning said light source support so as to position said light source in front of a light incident face of said light guide.

4. The light guide assembly according to claim 3, **characterized in that** said locating device comprises a flange (106) of said fastening part, and a hole (107) is provided into this flange and configured to accommodate a part of said light source support.

5. The light guide assembly according to any of claims 2 to 4, **characterized in that** said positioning device is supported by said fastening part.

6. The light guide assembly according to claim 5, **characterized in that** said fastening part has a first surface (109) and a second surface (108), and said positioning device is supported by the first surface of said fastening part, and the second surface is situated opposite to the first surface of said fastening part and configured to accommodate said light source support.

7. The light guide assembly according to any of claims 2 to 4, **characterized in that** said fastening part extends in a direction perpendicular to a direction of extension of the elongated light guiding portion of the light guide.

8. The light guide assembly according to any of claims 1 to 4, **characterized in that** said positioning device comprises a positioning hook (17), and the light guide support comprises:
an accommodating groove (11) arranged to receive the positioning hook;
wherein one or more supporting rib/ribs (12) is/are arranged on an inner wall of the accommodating groove and configured to abut against and support the positioning hook.

9. The light guide assembly according to claim 8, **characterized in that** the inner wall of the accommodating groove has a first side wall inner face (13), a second side wall inner face (14) opposite to the first side wall inner face, and a bottom inner face (15), wherein the supporting rib/ribs is/are arranged on at least one of the first side wall inner face, the second side wall inner face and the bottom inner face.

10. The light guide assembly according to claim 8, **characterized in that** the supporting rib/ribs is/are distributed discretely or continuously in a longitudinal direction of the accommodating groove.

11. The light guide assembly according to claim 8, **characterized in that** the supporting rib/ribs is/are formed by fillers in the accommodating groove or formed integrally with the accommodating groove.

12. The light guide assembly according to claim 8, **characterized in that** the positioning hook is arranged to abut against the supporting rib/ribs of the light guide support.

13. The light guide assembly according to claim 12, **characterized in that** the positioning hook has three surfaces located to abut against the supporting rib/ribs.

14. The light guide assembly according to claim 12, **characterized in that** the positioning hook and the supporting rib/ribs form interference fit to each other.

15. A vehicle lamp comprising the light guide assembly according to any one of claims 1-14.
